# EUROPÄISCHE PATENTSCHRIFT

(11) **EP 3 474 039 B1**
(45) Veröffentlichungstag und Bekanntmachung des Hinweises auf die Patenterteilung: **25.09.2019**
(21) Anmeldenummer: 17197568.3
(22) Anmeldetag: 20.10.2017
(51) Int. Cl.: G01S 17/10, G01S 17/36, G01S 7/484, G01S 7/486

(54) **ENTFERNUNGSMESSENDER OPTOELEKTRONISCHER SENSOR UND VERFAHREN ZUR ABSTANDSBESTIMMUNG**
DISTANCE MEASURING OPTO-ELECTRONIC SENSOR
CAPTEUR OPTOÉLECTRONIQUE ET PROCÉDÉ DE DÉTERMINATION DE DISTANCE

(43) Veröffentlichungstag der Anmeldung: 24.04.2019
(73) Patentinhaber: Sick AG, 79183 Waldkirch (DE)
(72) Erfinder: Marra, Martin, 79280 Au (DE); Clemens, Klaus, 79367 Weisweil (DE)

(56) Entgegenhaltungen:
- EP-B1- 3 124 992
- DE-A1-102004 041 500
- US-A- 5 889 490
- US-A1- 2008 088 818
- O'CONNOR SHAWN ET AL: "Waveform design considerations for modulated pulse lidar", VISUAL COMMUNICATIONS AND IMAGE PROCESSING; 20-1-2004 - 20-1-2004; SAN JOSE,, Bd. 9111, 23. Mai 2014 (2014-05-23), Seiten 91110P-91110P, XP060037678, DOI: 10.1117/12.2050395 ISBN: 978-1-62841-730-2

## Beschreibung

Die Erfindung betrifft einen entfernungsmessenden optoelektronischen Sensor und ein Verfahren zur Erfassung und Abstandsbestimmung eines Objekts in einem Überwachungsbereich nach dem Oberbegriff von Anspruch 1 beziehungsweise 14.

Für eine optische Entfernungsbestimmung wird oftmals die Laufzeit eines Lichtsignals gemessen, die über die Lichtgeschwindigkeit der Entfernung entspricht. Ein entfernungsmessender Lichttaster wird auf ein Ziel ausgerichtet, dessen Abstand gemessen werden soll. Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Man unterscheidet herkömmlich die pulsbasierte und die phasenbasierte Messung der Lichtlaufzeit. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Bei den Pulsverfahren kann man weiter zwischen Einzelpulsmessung mit jeweils nur einem starken Puls pro Messung und sogenannten Pulsmittelungsverfahren unterscheiden. Bei letzteren werden mehrere Einzelpulse ausgesandt, die zugehörigen Empfangssignale kumuliert und gemeinsam ausgewertet. Die EP 1 972 961 B1 stellt ein solches Verfahren vor, das die einzelnen Empfangssignale durch Binarisierung lediglich zweiwertig ausliest und das besonders effizient implementiert werden kann. Die EP 2 942 645 B1 erweitert dies durch Einsatz von zwei Schwellen auf drei Zustände des Empfangssignals. In der EP 2 942 644 B1 erfolgt eine Mehrschwellenabtastung. Wie bei vielen bekannten Pulsmittelungsverfahren spielt hier auch eine geschickte Befilterung im analogen Teil des Empfangspfads eine wichtige Rolle.

Einzelpulsverfahren zeichnen sich wegen der vergleichsweise hohen Pulsenergie durch eine hohe Reichweite und ein hohes Signal-Rausch-Verhältnis aus. Sie sind außerdem multiechofähig, können also Abstände zu mehreren hintereinander auf dem Messstrahl angeordneten, teiltransparenten Objekten messen. Dafür ist die Messgenauigkeit begrenzt, die mit der Pulslänge zusammenhängt. Es ist nicht nur technisch extrem aufwändig, Einzelpulse im Pikosekundenbereich zu erzeugen. Es wären außerdem für übliche Reichweiten ungeheure Pulsleistungen erforderlich, beispielsweise bei einer Pulslänge von 250 ps bereits ca. 1kW.

Phasenverfahren verhalten sich in mancherlei Hinsicht spiegelbildlich. Bei ausreichendem Signal-Rauschverhältnis ergeben sich minimale systematische Fehler, da sich Störeffekte wie ein Sende-zu-Abtast-Jitter bis auf Quarzgenauigkeit ausmitteln. Diese Mittelung bedeutet zugleich, dass ein Umgang mit mehreren Echos von mehreren Zielen nicht möglich ist. Zudem muss aus Augenschutzgründen mit kleinen optischen Ausgangsleistungen gearbeitet werden, beispielsweise 1mW, da das Sendesignal ständig aktiv ist. Schon nach relativ kurzen Abständen liegt das Nutzsignal im Rauschteppich, das Signal-Rauschverhältnis ist demnach sehr ungünstig und die Reichweite begrenzt. Außerdem gibt es einen von der Modulationsfrequenz abhängigen Eindeutigkeitsbereich. Nun hängt aber die Messgenauigkeit mit der Modulationsfrequenz zusammen, mit höheren Modulationsfrequenzen schrumpft der Eindeutigkeitsbereich weiter zusammen. Um damit umzugehen, werden herkömmlich nacheinander mehrere Modulationsfrequenzen genutzt, was wiederum die Messzeit erhöht.

Bei Phasenverfahren wäre, sieht man von dem Eindeutigkeitsproblem ab, eine sehr hohe Modulationsfrequenz wünschenswert, die zu einer besonders hohen Messgenauigkeit führt. Die Modulationsfrequenz muss aber am Empfänger noch abbildbar bleiben. Das Empfangselement ist üblicherweise eine PIN-Diode oder eine APD (Avalanche Photo Diode, Lawinenphotodiode), und hierbei ist die maximale Bandbreite durch die parasitäre Kapazität der Diode in Verbindung mit dem Eingangswiderstand eines Tranzimpedanzverstärkers im Empfangspfad begrenzt. Hier gibt es eine Wechselwirkung zwischen der Bandbreite und der Größe der Photodiode, die wiederum den optischen Wirkungsgrad bestimmt: Je höher die Bandbreite, umso kleiner die Photodiode, somit umso schlechter der optische Wirkungsgrad, und umgekehrt. Mit einer 1 mm² großen Photodiode lassen sich nach heutigem Stand der Technik Modulationsfrequenzen im Bereich von 100 MHz erreichen. Für eine Modulationsfrequenz im GHz-Bereich müsste die genannte Fläche von 1 mm² um mindestens eine Größenordnung schrumpfen, und das einfallende Licht auf derart kleiner Fläche reicht in aller Regel nicht mehr für eine robuste Erfassung aus.

Um eine besonders hohe Empfindlichkeit zu erreichen, kann eine Lawinenphotodiode oberhalb der Durchbruchspannung vorgespannt und damit im sogenannten Geigermodus betrieben werden (SPAD, Single Photon Avalanche Diode). Bei einer üblichen APD löst das einfallende Licht einen kontrollierten Lawinendurchbruch (Avalanche Effect) aus, und es entsteht ein Photostrom, der zu der Lichtempfangsintensität proportional ist. Im Geigermodus dagegen genügt schon ein einziger, durch ein einzelnes Photon freigesetzter Ladungsträger, um eine unkontrollierte Lawine auszulösen, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Eine Besonderheit ist die Tatsache, dass bereits ein minimales Störereignis, wie ein Fremdlichtphoton oder Dunkelrauschen, das gleiche maximale Empfangssignal erzeugt wie ein Nutzlichtsignal.

Um das Empfangssignal einer SPAD für eine Abstandsmessung nutzen zu können, muss es ausgelesen oder abgegriffen werden. Mit herkömmlichen Herangehensweisen gelingt dies jedoch bei hochfrequenten Signalen nicht. Daher hilft auch die hohe Empfindlichkeit von SPADs zunächst nicht über den geschilderten Widerspruch zwischen Bandbreite und optischem Wirkungsgrad hinweg. Aus der EP 3 124 992 B1 ist ein SPAD-Lichtempfänger bekannt, der über ein aktives Kopplungselement ausgelesen wird und so eine wesentlich höhere Bandbreite verarbeiten kann. Dort wird das aber nicht in besonderen Zusammenhang mit einem Phasenverfahren gebracht.

Für einen entfernungsmessenden Sensor ist demnach je nach vorgesehenem Anwendungsgebiet eine Entscheidung zu treffen, welche Stärken der jeweiligen Verfahren zur Bestimmung der Lichtlaufzeit benötigt werden, und die Nachteile müssen dann in Kauf genommen werden. Pulsmittelungsverfahren bewegen sich in etwa zwischen Einzelpulsverfahren und Phasenverfahren und können daher einen guten Kompromiss bilden. Das bedeutet aber umgekehrt, dass auch die Nachteile beider Verfahren erhalten bleiben, wenn auch in abgeschwächter Form.

Aus der US 5 889 490 ist eine hochauflösende Entfernungsmessung bekannt, bei der periodisch modulierte Laserbursts verwendet werden. Es wird einerseits wie bei einem Pulsverfahren für eine Grobmessung die Laufzeit der Bursts, andererseits für eine Feinmessung die Phasenlage innerhalb der Bursts ausgewertet.

Die DE 10 2004 041 500 A1 offenbart ein scannendes Laserentfernungsmessgerät, das eine Kombination der Impulslaufzeit- und Phasendifferenzmessung nutzt.

In der US 2008/0088818 A1 verwendet ein Laserentfernungsmessgerät Bursts und bestimmt empfangsseitig einerseits deren Position und andererseits eine Phasendifferenz.

Die Arbeit von O'connor, Shawn, et al. "Waveform design considerations for modulated pulse lidar." Ocean Sensing and Monitoring VI. Vol. 9111. International Society for Optics and Photonics, 2014 befasst sich mit verschiedenen Sendesignalen für Unterwasseraufnahmen

Es ist daher Aufgabe der Erfindung, die Abstandsmessung in einem Lichtlaufzeitverfahren zu verbessern.

Diese Aufgabe wird durch einen entfernungsmessenden optoelektronischen Sensor und ein Verfahren zur Erfassung und Abstandsbestimmung eines Objekts in einem Überwachungsbereich nach Anspruch 1 beziehungsweise 14 gelöst. Der Sensor weist zunächst wie üblich einen Lichtsender, einen Lichtempfänger sowie eine Steuer- und Auswertungseinheit auf, um ein Lichtsignal auszusenden, wieder zu empfangen und durch Auswertung des Empfangssignals die Lichtlaufzeit und damit den Abstand zu einem Objekt zu messen.

Die Erfindung geht von dem Grundgedanken aus, eine Kombination aus einem Pulsverfahren und einem Phasenverfahren zu bilden. Dazu wird als Sendesignal ein Puls verwendet, der zusätzlich zu seiner Pulsform moduliert ist. Ein solcher modulierter Puls kann auch als Burst bezeichnet werden und bildet zunächst sendeseitig die Überlagerung der Signale, die für ein Pulsverfahren beziehungsweise ein Phasenverfahren verwendet werden. Dabei sei sicherheitshalber klargestellt, dass es sich um eine Amplitudenmodulation handelt, die mit der Wellenlänge des Lichts nichts zu tun hat.

In dem Empfangssignal wird einerseits wie in einem Pulsverfahren ein Empfangszeitpunkt gesucht. Das ist letztlich eine Auswertung der Lage des Pulses in dem Empfangssignals, beispielsweise einer Hüllkurve des modulierten Pulses. Die gewonnene Information entspricht einer ersten pulsbasierten Abstandsmessung, wobei beispielsweise der Schwerpunkt des modulierten Pulses einen ersten, noch vergleichsweise ungenauen Abstandswert liefert. Andererseits wird wie in einem Phasenverfahren ein Phasenversatz zwischen Sendesignal und Empfangssignal oder anders ausgedrückt die Phasenlage des Empfangssignals bestimmt. Dies wird vorzugsweise auf eine Umgebung des Empfangszeitpunkts beschränkt, damit sich bei mehreren Zielen die Phaseninformationen nicht vermischen. Der Phasenversatz verfeinert die auf dem Empfangszeitpunkt beruhende Abstandsmessung. Man kann dies auch so auffassen, dass die pulsbasierte Messung durch den Empfangszeitpunkt die Mehrdeutigkeit des Phasenverfahrens auflöst. Somit wird in dem Empfangssignal pulsbasiert die richtige, dem tatsächlichen Abstand entsprechende Periode innerhalb des Bursts identifiziert und zudem die genaue Phasenlage innerhalb dieser Periode bestimmt. Außerdem kann im Falle von mehreren Echos bei mehreren Zielen anhand von Empfangszeitpunkten der jeweils richtige Burst erkannt werden.

Die Erfindung hat den Vorteil, dass die Stärken von Puls- und Phasenverfahren kombiniert sind, während zugleich die Schwächen weitgehend kompensiert sind. Es wird somit wie in einem Pulsverfahren ein gutes Signal-Rauschverhalten mit hoher Reichweite erzielt. Der Eindeutigkeitsbereich entspricht einem Pulsverfahren und ist praktisch allenfalls noch durch die Pulswiederholfrequenz limitiert, und auch die Mehrechofähigkeit bleibt erhalten. Zugleich wird die Genauigkeit durch das Phasenverfahren bestimmt, wobei sehr hohe Modulationsfrequenzen wählbar sind, weil das übliche Eindeutigkeitsproblem eines Phasenverfahrens durch die Kombination nicht mehr besteht. Die Messung bleibt sehr schnell, kann bereits aus Einzelpulsen beziehungsweise einzelnen Bursts einen Abstand bestimmen, wobei ein Mehrpulsverfahren analog einem Pulsmittelungsverfahren auch denkbar ist. Der Aufwand ist auch bei sehr großer Messgenauigkeit gering, da auch mit Hochfrequenz-Standardkomponenten, wie Oszillator, Mischer und Filter, ein Hochfrequenzbereich erschlossen wird. Auch eine Skalierbarkeit ist gewährleistet, denn Verändern einzelner Parameter kann einfach zwischen den verschiedenen Vorteilen priorisiert werden.

Der Puls ist vorzugsweise mit einer Frequenz von mindestens 500 MHz, mindestens 1 GHz, mindestens 2 GHz oder mehr moduliert. Eine solche Frequenz liegt um Faktoren oberhalb dessen, was bisher nach dem Stand der Technik in Phasenverfahren eingesetzt wird, so dass sich auch eine drastische Verbesserung der Messgenauigkeit ergibt. Besonders bevorzugt ist die Nutzung des 2,4-GHz-ISM-Frequenzbands (Industrial, Scientific and Medical Band), denn dafür sind zahlreiche kommerziell erhältliche Hochfrequenzbausteine ausgelegt. Prinzipiell sind auch andere Frequenzbänder, wie etwa das 5GHz-Band oder ein anderes, von künftigen Standards genutztes Frequenzband denkbar. Ein Einzelpulsverfahren mit Pulslängen, die einer Periode eines GHz-Signals entsprechen, müsste Pikosekundenpulse verwenden, wobei dann aber wie einleitend schon erwähnt unrealistisch hohe Pulsleistungen benötigt würden.

Die Steuer- und Auswertungseinheit stellt bevorzugt eine Basisfrequenz bereit und weist einen sendeseitigen Mischer mit einem Taktgeber schneller als die Basisfrequenz zum Heraufmischen auf eine Modulationsfrequenz für die Modulation des Pulses auf. Die Basisfrequenz liegt beispielsweise bei 10 MHz oder einer anderen, in der Steuer- und Auswertungseinheit ohne weiteres verarbeitbaren Frequenz, in der die spätere Modulation für den Puls zunächst erzeugt wird. Dazu kann der Basistakt durch ein Tiefpassfilter in ein Sinussignal gewandelt werden, das dann auf die Modulationsfrequenz heraufgemischt wird.

In bevorzugter Weiterbildung ist der sendeseitige Mischer als I/Q-Mischer oder IQ-Modulator ausgebildet. Damit kann das Heraufmischen auf die Modulationsfrequenz auf zuverlässige Weise gewährleistet werden, und darüber hinaus bietet ein I/Q-Mischer noch weitere Möglichkeiten, die Modulationsfrequenz zu verändern oder zu wechseln.

Der Taktgeber erzeugt bevorzugt eine Frequenz, die einem nichtganzzahligen Vielfachen der Basisfrequenz entspricht. Die Modulationsfrequenz ist dementsprechend zwar konstant, aber gegenüber der Basisfrequenz leicht verstimmt. Bauelemente der Auswertungsschaltung, insbesondere Filter, zeigen ein Einschwingverhalten des modulierten Pulses, das von der Phase der jeweils anliegenden Basis- beziehungsweise Modulationsfrequenz abhängt. Das Verstimmen wiederum bewirkt durch Schwebungseffekte unterschiedliche Phasen zu Beginn des modulierten Pulses und variiert so das Einschwingverhalten. Bei einer bevorzugten Mehrfachmessung werden sich daher die durch das Einschwingen erzeugten Messfehler ausmitteln.

Die Steuer- und Auswertungseinheit ist bevorzugt dafür ausgebildet, die Modulationsfrequenz zu wechseln. Dadurch kann mit verschiedenen Frequenzen gemessen werden, um ein noch besseres Messergebnis zu erhalten, weil Messergebnisse mit modulierten Pulsen unterschiedlichen Verhaltens einfließen. Eine Phasenmessung mit mehreren Frequenzen ermöglicht es auch, den Eindeutigkeitsbereich über die angestrebte Reichweite des Sensors hinaus zu erweitern, was in einigen Ausführungsformen in Ergänzung zur Auflösung von Mehrdeutigkeiten mittels Bestimmung des Empfangszeitpunkts des modulierten Pulses ausgenutzt wird. Erreicht wird der Wechsel der Modulationsfrequenz vorzugsweise durch Wechsel von Seitenbändern beziehungsweise Invertieren eines Basisbandsignals eines als I/Q-Mischer ausgebildeten sendeseitigen Mischers oder durch Vorsehen mindestens zweier Bandpassfilter unterschiedlicher Durchlassfrequenz. Dadurch kann mit verschiedenen Frequenzen gemessen werden, ohne dass Einschwingvorgänge von PLLs oder ähnlichen Bausteinen des Taktgebers entstehen.

Die Steuer- und Auswertungseinheit weist bevorzugt eine Pulserzeugungseinheit auf, um Zeitfenster für den modulierten Puls vorzugeben. Durch solche Zeitfenster (Gating) lässt sich aus einem kontinuierlichen periodischen Signal ein modulierter Puls erzeugen. Beispielsweise wird nur während des durch die Pulserzeugungseinheit definierten Zeitfensters eine modulierte Signalquelle mit dem Lichtsender verbunden, so dass ein Burst entsteht, beziehungsweise der Puls und das modulierte Signal einander multiplikativ überlagert. Die Pulserzeugungseinheit kann im Basistakt arbeiten, da die Pulslänge ohnehin größer ist als eine Periode der Modulationsfrequenz, damit der modulierte Puls zumindest mehr als eine oder einige Perioden der Modulation aufweist, um den Phasenversatz genau zu bestimmen.

Die Steuer- und Auswertungseinheit ist bevorzugt dafür ausgebildet, das Zeitfenster um einen Bruchteil der Basisfrequenz zu versetzen. Dann beginnt der jeweilige modulierte Puls jeweils mit einer anderen Phase. Wie oben schon im Zusammenhang mit dem Verstimmen der Modulationsfrequenz gegen die Basisfrequenz erläutert, hängt das Einschwingverhalten bestimmte Komponenten der Steuer- und Auswertungselektronik mit dieser Phase zusammen und wird daher auf diese Weise variiert. Dadurch kann die Bestimmung des Phasenversatzes und damit die Entfernungsmessung insbesondere nach Mittelung über mehrere Messungen verbessert werden.

Die Steuer- und Auswertungseinheit ist bevorzugt dafür ausgebildet, einer Bestimmung des Abstands zumindest zwei Messungen mit unterschiedlich langen modulierten Pulsen zugrunde zu legen. Ein langer modulierter Puls enthält viele Perioden der Modulationsfrequenz und ermöglicht so eine besonders genaue Bestimmung des Phasenversatzes. Ein kurzer modulierter Puls verbessert die Mehrechofähigkeit, weil die empfangenen modulierten Pulse auch schon bei kurzen Abstandsunterschieden mehrerer angetasteter Ziele nicht mehr ineinanderlaufen.

Die Steuer- und Auswertungseinheit ist bevorzugt dafür ausgebildet, einen nicht modulierten Hilfspuls auszusenden und dessen Lichtlaufzeit zu bestimmen. Erfindungsgemäß wird bereits ein Pulsverfahren eingesetzt, welches den Empfangszeitpunkt des modulierten Pulses bestimmt. Das ist aber nicht immer genau genug, insbesondere bei mehreren nahe benachbarten Zielen. Wenn mit dem modulierten Puls allein keine ausreichend genaue Messung möglich ist, können Mehrdeutigkeiten des Phasenverfahrens möglicherweise nicht mehr zuverlässig aufgelöst werden. Dann wird unterstützend ein Pulsverfahren mit dem Hilfspuls eingesetzt. Prinzipiell könnte die Pulsmessung über den Hilfspuls sogar diejenige über den modulierten Puls ersetzen. Vorzugsweise weicht die Pulswiederholfrequenz des Hilfspulses von der Messwiederholrate, also der Pulswiederholfrequenz des modulierten Pulses ab. Der Hilfspuls hat dann eine variable Verzögerung gegenüber dem modulierten Puls und stört diese in jeder Wiederholung an einer anderen Stelle. Insbesondere bei einem Mittelungsverfahren werden dann Störeffekte durch den Hilfspuls derart verschmiert, dass sie auf die Messung mit dem modulierten Puls keine Auswirkung mehr haben.

Der Lichtempfänger weist bevorzugt eine Vielzahl von Lawinenphotodiodenelemente auf, die jeweils mit einer Vorspannung oberhalb einer Durchbruchspannung vorgespannt und somit in einem Geiger-Modus betrieben sind. Es handelt sich folglich um einen SPAD-Empfänger mit sehr hoher Empfindlichkeit. Eine Bandbreitenbegrenzung durch den Signalabgriff ist dabei keine physikalische Notwendigkeit, sondern kann beispielsweise durch geschickte Auswahl der Schaltung gelöst werden. Ein solcher Lichtempfänger kann daher ein sehr gutes Hochfrequenzverhalten zeigen, sogar in Frequenzbereichen weit oberhalb dessen, was für PIN-Dioden oder APDs im Stand der Technik üblich ist.

Der Sensor weist bevorzugt eine Signalabgriffschaltung zum Auslesen der Lawinenphotodiodenelemente auf, wobei die Signalabgriffschaltung ein aktives Kopplungselement mit einem Eingang, der mit einem Lawinenphotodiodenelement verbunden ist, und mit einem Ausgang aufweist, wobei das Kopplungselement einen Geigerstrom des Lawinenphotodiodenelements am Eingang auf einen in Verlauf und Pegel dem Geigerstrom entsprechenden Messstrom abbildet, indem der Eingang für den Geigerstrom einen virtuellen Kurzschluss gegen ein Potential bildet und der Ausgang von dem Eingang entkoppelt ist. Diese Signalabgriffschaltung ist ein Beispiel für eine Möglichkeit, SPADs breitbandig zu betreiben und so hohe Modulationsfrequenzen mit entsprechend hoher Genauigkeit der Phasenmessung zu erreichen. Durch das aktive Kopplungselement und den virtuellen Kurzschluss kann der Geigerstrom nahezu vollständig aus dem jeweils auslösenden Lawinenphotodiodenelement in die Signalabgriffschaltung abfließen. Zugleich wird der Messstrom durch das Kopplungselement nahezu vollständig von dem Geigerstrom entkoppelt. Die weitere Verarbeitung des Messstroms wirkt daher nicht auf den Geigerstrom zurück. Der Verlauf des Messstroms weicht erst für Änderungen im höheren Gigahertzbereich, insbesondere oberhalb zwei oder drei GHz, durch frequenzbedingte Verluste erheblich von dem Geigerstrom ab.

Die Steuer- und Auswertungseinheit weist bevorzugt einen empfangsseitigen Mischer auf, welcher das Empfangssignal unter Erhaltung der Phasenlage auf eine Basisfrequenz herabmischt. Die Auswertung kann dann bei der vergleichsweise langsamen Basisfrequenz durchgeführt werden, so dass deutlich einfachere Bauteile genügen. Die Basisfrequenz ist vorzugsweise dieselbe, die auch sendeseitig den Ausgangspunkt zum Heraufmischen bildet. Sende- und empfangsseitige Mischer sorgen also dafür, dass die Signalerzeugung und Auswertung praktisch im Basistakt erfolgen kann und die hohe Modulationsfrequenz nur auf dem Lichtweg verwendet ist. Der empfangsseitige Mischer ist besonders bevorzugt ein IQ-Mischer oder IQ-Demodulator, wobei dies dann vorteilhafterweise mit einem sendeseitigen IQ-Modulator kombiniert ist. Ein IQ-Demodulator stellt über I und Q zwei Signale und damit doppelt so viel Phaseninformation zur Verfügung, was eine noch genauere Bestimmung des Phasenversatzes erlaubt.

Die Steuer- und Auswertungseinheit weist bevorzugt einen ersten Empfangspfad für die Bestimmung des Empfangszeitpunktes und einen zweiten Empfangspfad für die Bestimmung des Phasenversatzes auf. Die Pfade können wahlweise schon nach dem Signalabgriff oder erst nach dem Herabmischen getrennt werden. Durch getrennte Pfade wird die Auswertung parallelisiert, und erst anschließend werden die Messinformationen zusammengeführt. Insbesondere wird der Phasenversatz ausgenutzt, um den aus der Pulslage bestimmten Abstandswert zu verfeinern, oder anders ausgedrückt die Pulslage ausgenutzt, um die richtige Periode zu finden und so die Mehrdeutigkeit des Phasenverfahrens aufzulösen.

Die Steuer- und Auswertungseinheit ist bevorzugt dafür ausgebildet, mehrere Einzelmessungen mit jeweils mindestens einem modulierten Puls durchzuführen und für die weitere Bestimmung von Empfangszeitpunkt und/oder Phasenversatz aus den Einzelmessungen ein gemeinsames Empfangssignal zu bilden und auszuwerten. Es entsteht eine Art Pulsmittelungsverfahren wie in der einleitend genannten EP 1 972 961 B1, wobei aber die Einzelpulse moduliert sind, was man als ein Burstmittelungsverfahren bezeichnen könnte. Es wird aus mehreren einzelnen modulierten Pulsen durch Aufaddieren, Mitteln oder dergleichen ein gemeinsames Empfangssignal der Einzelmessungen erzeugt und dann ausgewertet, was unter anderem das Signal-Rauschverhältnis verbessert und auch bei vergleichsweise schwachen Empfangssignalen noch eine verlässliche Auswertung ermöglicht.

Gerade bei SPAD-Empfängern ist statt oder zusätzlich zu einer zeitlichen statistischen Auswertung auch eine örtliche Kombination über mehrere einzelne Lawinenphotodiodenelemente möglich. Die Steuer- und Auswertungseinheit ist in dieser Verallgemeinerung eines Pulsmittelungsverfahrens bevorzugt dafür ausgebildet, Empfangssignale mehrerer Lawinenphotodiodenelemente und/oder Empfangssignale zu verschiedenen Zeiten statistisch auszuwerten. Dadurch wird auch der Effekt ausgeglichen, dass SPADs durch einzelne Störlichtphotonen oder Dunkelrauschen ein ebenso starkes Signal erzeugen wie durch Nutzlicht und auf eine Detektion eine Totzeit praktisch für die ganze übrige Einzelmessung folgt. Nicht nur ein schwaches Nutzsignal, sondern auch derartige SPAD-spezifische Effekte werden durch das Sammeln von Ereignissen über Zeit und/oder Ort sowie gemeinsame statistische Bewertung ausgeglichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung eines optoelektronischen Sensors zur Lichtlaufzeitmessung;
- Fig. 2: ein vereinfachtes Schaltbild einer Lawinenphotodiode im Geigermodus mit einer Signalabgriffschaltung;
- Fig. 3: eine Blockdarstellung einer Ausführungsform eines Messkerns für eine Lichtlaufzeitmessung;
- Fig. 4: beispielhafte Signalverläufe in verschiedenen Stadien einer Lichtlaufzeitmessung;
- Fig. 5: eine Blockdarstellung einer weiteren Ausführungsform eines Messkerns ähnlich Figur 3, jedoch mit getrennten Empfangspfaden;
- Fig. 6: eine Blockdarstellung einer weiteren Ausführungsform eines Messkerns mit Hilfspulsen;
- Fig. 7: eine Blockdarstellung einer weiteren Ausführungsform eines Messkerns mit IQ-Mischern;
- Fig. 8: eine Blockdarstellung einer weiteren Ausführungsform eines Messkerns mit IQ-Mischern ähnlich Figur 7, jedoch mit elektronischer Referenzmessung; und
- Fig. 9: eine Blockdarstellung einer weiteren Ausführungsform eines Messkerns mit IQ-Mischern ähnlich Figur 7, jedoch mit optischer Referenzmessung.

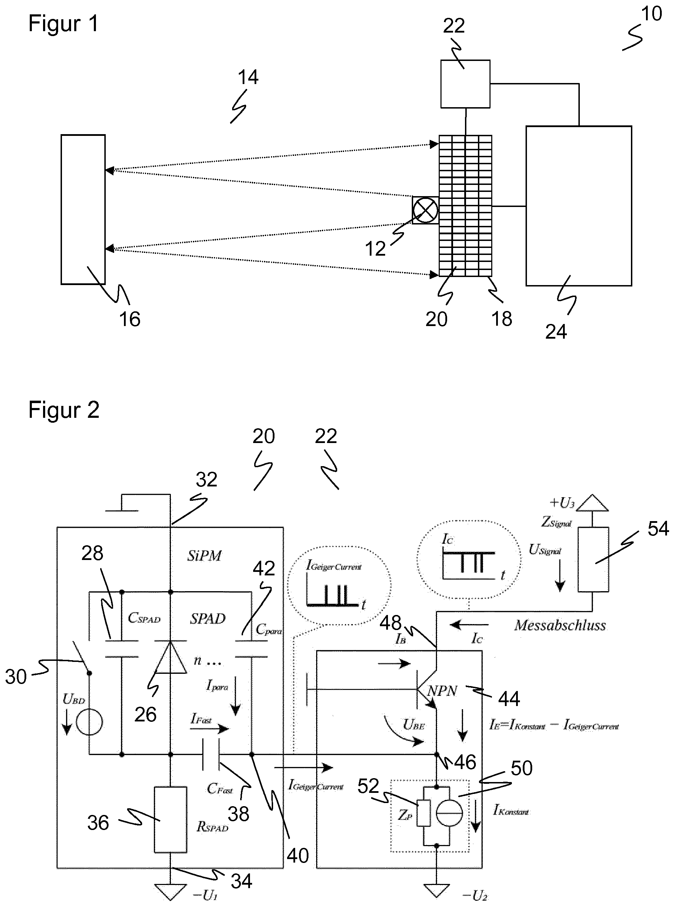

Figur 1 zeigt eine sehr vereinfachte schematische Blockdarstellung eines optoelektronischen Sensors 10 in einer Ausführungsform als einstrahliger Lichttaster. Ein Lichtsender 12, beispielsweise eine LED oder eine Laserlichtquelle, sendet ein Lichtsignal in einen Überwachungsbereich 14 aus. Trifft es dort auf ein Objekt 16, so wird ein Teil des Lichtsignals remittiert oder reflektiert und kehrt zu einem Lichtempfänger 18 zurück. Dieser Lichtempfänger 18 weist in dieser Ausführungsform eine Vielzahl von Lichtempfangselementen auf, die als Lawinenphotodiodenelemente 20 im Geigermodus oder SPADs ausgebildet sind. Die Lawinenphotodiodenelemente 20 sind beispielsweise zu einer Matrix, einer Linie oder auch in einem anderen Muster oder irregulär angeordnet. In anderen Ausführungsformen weist der Lichtempfänger 18 keine SPADs auf, sondern andere Lichtempfangselemente, oder es handelt sich um einen Einzelempfänger mit nur einem Lichtempfangselement.

Die Empfangssignale der Lawinenphotodiodenelemente 20 werden über eine Signalabgriffschaltung 22 von einer Steuer- und Auswertungseinheit 24 ausgelesen und dort ausgewertet. Umgekehrt kann auch die Steuer- und Auswertungseinheit 24 auf Lichtsender 12 und/oder Lichtempfänger 18 einwirken, etwa um das Lichtsignal zu formen und auszulösen oder dessen Eigenschaften festzulegen, oder um Eigenschaften des Lichtempfängers 18 einzustellen.

Die Auftrennung in Lichtempfänger 18, Signalabgriffschaltung 22 und Steuer- und Auswertungseinheit 24 in Figur 1 ist so auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodiodenelemente 20 und einzelnen oder Gruppen von Lawinenphotodiodenelementen 20 zugeordnete Schaltkreise zu deren Auswertung und Ansteuerung teilen. Auch optische Anordnung mit einem Lichtsender 12, der einen kleinen Anteil des Lichtempfängers 18 verdeckt, ist rein beispielhaft. Alternativ sind andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

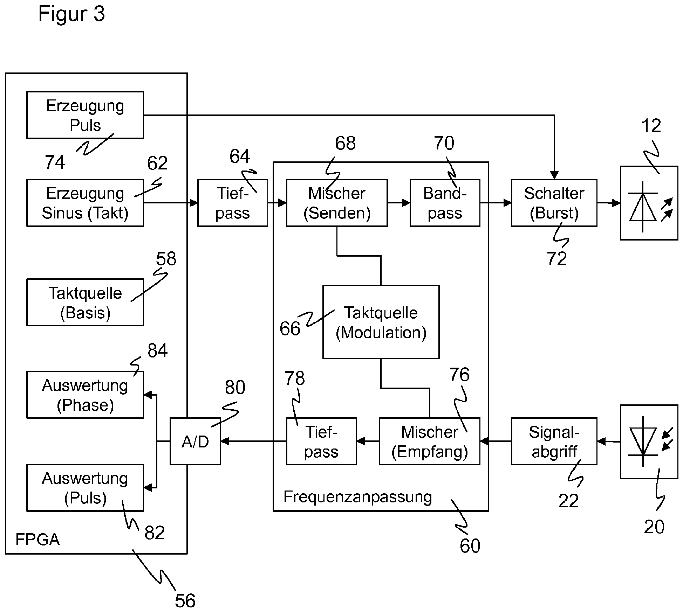

Um den Abstand des Objekts 16 zu messen, bestimmt die Steuer- und Auswertungseinheit 24 eine Lichtlaufzeit von Aussenden eines Lichtsignals bis zu dessen Empfang und rechnet dies über die Lichtgeschwindigkeit in einen Abstand um. Erfindungsgemäß wird dafür eine Kombination aus einem Pulsverfahren und einem Phasenverfahren eingesetzt, die später unter Bezugnahme auf die Figuren 3 bis 5 näher erläutert wird. Mehrere Sensoren 10 können miteinander verbunden werden, um ein tastendes Lichtgitter mit mehreren, meist parallelen Strahlen zu bilden, welches in jedem Strahl Entfernungen misst oder überwacht. Auch mobile Systeme sind denkbar, bei denen der Sensor 10 beweglich montiert ist. Außerdem kann der Sensor 10 auch als Laserscanner mit einer beweglichen Ablenkeinheit zur Abtastung des Überwachungsbereichs 14 ausgebildet sein.

Figur 2 zeigt ein vereinfachtes beispielhaftes Schaltbild einer Lawinenphotodiode 20 und einer Signalabgriffschaltung 22. Wie einleitend schon erläutert, ist es für einen herkömmlichen Lichtempfänger ein Widerspruch, zugleich eine hohe Bandbreite und eine hohe Empfindlichkeit zur Verfügung zu stellen, weil eine hohe Bandbreite mit einer kleinen Empfangsfläche einhergeht. Das in Figur 2 gezeigte Beispiel jedoch ist eine Schaltung eines Lawinenphotodiodenelements 20 mit einer Signalabgriffschaltung 22, die trotz der hohen Empfindlichkeit hochfrequenzgeeignet ist.

Die Anzahl an Lawinenphotodiodenelementen 20 variiert je nach Bauteil und Zielanforderungen und kann bis zu mehreren tausend und darüber hinaus betragen. Ein entsprechendes Bauelement kann beispielsweise in einem CMOS-Prozess hergestellt werden. Die Durchbruchspannung der Lawinenphotodiodenelemente ist deutlich geringer als bei herkömmlichen Lawinenphotodioden, beispielsweise von höchstens 50 V oder 30 V. Dabei können die Lawinenphotodiodenelemente 20 gruppenweise oder insgesamt elektrisch zusammengeschaltet sein. Dies ermöglicht statistische Verfahren, die ausgleichen, dass ein einzelnes Lawinenphotodiodenelement 20 im Geiger-Modus einerseits schon durch ein einziges Fremdlichtphoton fehlausgelöst werden kann und andererseits nach jedem Auslösen einige Zeit lang nicht aktivierbar ist. Die Darstellung der Figur 2 jeweils einer Signalabgriffschaltung 22 für ein einzelnes Lawinenphotodiodenelement 20 ist demnach nur ein Beispiel, eine Signalabgriffschaltung 22 kann auch für eine Gruppe oder alle Lawinenphotodiodenelemente 20 zuständig sein.

Der eigentliche Aufbau des Halbleiterbauteils wird als bekannt vorausgesetzt und nicht dargestellt. In dem Ersatzschaltbild der Figur 2 zeigt das Lawinenphotodiodenelement 20 zum einen das Verhalten einer Diode 26. Es hat außerdem eine Kapazität, die durch den parallel geschalteten Kondensator 28 repräsentiert wird. Ein Lawinendurchbruch wird durch mindestens ein auftreffendes Photon ausgelöst, wobei dieser Vorgang wie ein Schalter 30 wirkt. Im Bereitschaftszustand liegt über der Diode 26 mit Hilfe einer ersten Elektrode 32 und einer zweiten Elektrode 34 eine Spannung oberhalb der Durchbruchspannung. Erzeugt dann ein einfallendes Photon ein Ladungsträgerpaar, so schließt dies gleichsam den Schalter 30, so dass das Lawinenphotodiodenelement 20 mit Ladungsträgern geflutet wird und ein sogenannter Geigerstrom fließt. Neue Ladungsträger entstehen aber nur, solange das elektrische Feld stark genug bleibt. Wird der Kondensator 28 so weit entladen, dass die Durchbruchspannung unterschritten ist, so kommt die Lawine von selbst zum Erliegen ("passive quenching"). Danach wird der Kondensator 28 aus den Elektroden 32, 34 über einen Widerstand 36 wieder aufgeladen, bis wieder eine Spannung über der Durchbruchspannung an der Diode 26 anliegt. Es gibt alternative Ausgestaltungen, in denen die Lawine von außen erkannt und daraufhin eine Entladung unter die Durchbruchspannung ausgelöst wird ("active quenching").

Während der Lawine steigt das Ausgangssignal rapide und unabhängig von der Intensität des auslösenden Lichts auf einen Maximalwert an und fällt dann nach dem Löschen der Lawine wieder ab. Die Zeitkonstante des Abfalls, welche eine Totzeit des Lawinenphotodiodenelements 20 angibt, liegt typischerweise im Bereich einiger bis einiger zehn Nanosekunden. Die Totzeit ist keine absolute Totzeit, denn sobald die Vorspannung groß genug ist, um eine Lawine zu unterstützen, kann das Ausgangssignal auch wieder ansteigen, allerdings nicht im gleichen Maße wie aus dem Bereitschaftszustand. Der Verstärkungsfaktor beträgt bis zu 10⁶ und ergibt sich im Wesentlichen aus der maximalen Anzahl von Ladungsträgern, die von der Lawine in dem Lawinenphotodiodenelement 20 rekrutiert werden können.

Die Funktion der Signalabgriffschaltung 22 ist, aus dem Geigerstrom während eines Lawinendurchbruchs ein Messsignal möglichst unter Ausnutzung des vollen Stromflusses abzuleiten, und zwar so, dass auch hochfrequente Anteile erhalten bleiben und ein hohes Signal/Rausch-Verhältnis erreicht wird. Die Signalauskopplung erfolgt vorzugsweise kapazitiv über einen Koppelkondensator 38. In der dargestellten Ausführungsform weist das Lawinenphotodiodenelement 20 eine dritte Elektrode 40 zum Auslesen eines Messsignals aus, wobei diese dritte Elektrode 40 über den Koppelkondensator 38 verbunden ist. Das Auslesen über die dritte Elektrode 40 kann Vorteile haben, ist aber nicht zwingend. Alternativ wird über eine der anderen Elektroden 32, 34 ausgelesen, dann aber der Widerstand 36 über einen parallelen Kondensator hochfrequenzmäßig überbrückt.

Die weiteren, in Figur 2 nicht dargestellten Lawinenphotodiodenelemente bilden aus Sicht des gezeigten Lawinenphotodiodenelements 20 parasitäre Kapazitäten 42, die durch sonstige parasitäre Effekte noch erhöht sein können. Die parasitäre Kapazität 42 summiert sich aus den meist zahlreichen weiteren Lawinenphotodiodenelementen und kann deshalb deutlich größer sein als die Kapazität des zugehörigen Koppelkondensators 38. Die parasitäre Kapazität 42 verhält sich wie ein Tiefpass, der hochfrequente Signale sperrt.

Die Signalabgriffschaltung 22 soll für die Erzielung hoher Geschwindigkeiten beziehungsweise Bandbreiten einen möglichst kleinen, gleichzeitig für eine hohe Empfindlichkeit einen großen Signalwiderstand aufweisen. Um diesen widersprüchlichen Anforderungen gerecht zu werden, nutzt die Signalabgriffschaltung 22 eine aktive Schaltungslösung mit einem aktiven Kopplungselement 44, das in Figur 2 als bipolarer NPN-Transistor in Basisschaltung ausgebildet ist. Andere aktive Elemente, insbesondere andere Transistoren (FET), eine andere Polarität (PNP) oder eine andere Verschaltung (Emitterschaltung) sind denkbar. Außerdem können statt einer einstufigen Schaltung auch mehrere Transistoren eingesetzt werden.

Das aktive Kopplungselement 44 hat nun mehrere erhebliche Vorteile für den Signalabgriff. Zum einen bietet es für den kapazitiv als Strompuls ausgekoppelten Geigerstrom praktisch keinen Widerstand, bildet also einen virtuellen Kurzschluss. Das wird praktisch nicht ganz erreicht, aber weniger als ein Ohm ist durchaus möglich. Dies führt dazu, dass es über der parasitären Kapazität 42 trotz der Lawine keine relevanten Spannungsänderungen und damit dort keine Umladevorgänge und keinen Stromfluss gibt. Dem aktiven Kopplungselement 44 steht daher eingangsseitig nahezu der gesamte durch den Koppelkondensator 38 fließende Geigerstrom zur Verfügung. Ohne den virtuellen Kurzschluss würden dagegen deutlich spürbare Anteile des Geigerstroms in der parasitären Kapazität 42 verloren gehen, und vor allem die schnellen, hochfrequenten Signalanteile durch das Tiefpassverhalten unterdrückt.

Zum zweiten erzeugt das aktive Kopplungselement 44 ausgangsseitig einen Messstrom, der in seinem zeitlichen Verlauf und Pegel dem Geigerstrom entspricht. Dabei kann das aktive Kopplungselement 44 den Messstrom durch seine Übertragungsfunktion auch gegenüber dem Geigerstrom gezielt verändern, ihn insbesondere verstärken. Es steht dafür an dem Kopplungselement 44 nahezu der vollständige Strom des Lawinendurchbruchs zur Verfügung. Der Messstrom ist anschließend ausgangsseitig als Detektionsergebnis zur Weiterverarbeitung abgreifbar. Der Messstrom speist sich aus einer Stromquelle des aktiven Kopplungselements 44 und nicht aus dem Lawinenphotodiodenelement 20.

Dabei sind zum dritten Eingangskreis und Ausgangkreis voneinander entkoppelt. Die Weiterverarbeitung des Messstroms hat also, in den technischen Grenzen einer realen Entkopplung, keinerlei Auswirkungen auf den Geigerstrom. Deshalb sind praktisch beliebige Nachfolgestufen möglich, die anders als herkömmliche Signalabgriffe keine ungünstigen Rückwirkungen auf den Geigerstrom haben.

Im konkreten Beispiel der Figur 2 bildet der Emitter des aktiven Kopplungselements 44 den Eingang 46, dem von der dritten Elektrode 40 der Geigerstrom zugeführt wird. Die Basis ist mit Masse oder allgemeiner einem festen Potential verbunden und damit virtuell kurzgeschlossen. Der Kollektor bildet den Ausgang 48, an dem der Messstrom bereitgestellt wird. Im Emitterkreis des Transistors befindet sich noch eine Konstantstromquelle 50 zwischen Eingang 46 und einer Versorgungsspannung -U2. Dadurch fließt hier zu Zeiten außerhalb von Lawinendurchbrüchen ein Gleichstrom, der den Arbeitspunkt des Transistors einstellt. Die Konstantstromquelle 50 kann alternativ passiv durch einen Widerstand 52 realisiert sein oder als Kombination aus beidem, wie in Figur 2 gezeigt. Am Ausgang 48 wird der Messstrom abgegriffen. Eine einfache Messimpedanz 54 ist nur ein Beispiel beliebiger Messschaltungen, die weitere aktive und/oder passive Elemente aufweisen können. Durch die Entkopplung mittels der Signalabgriffschaltung 22 haben diese Messschaltungen praktisch keine Rückwirkung auf die eigentliche Messung.

Die Signalabgriffschaltung 22 hat ein deutlich verbessertes Hochfrequenzverhalten mit einem nahezu flachen Frequenzgang bis in den Bereich von einigen GHz hinein und erst dann einem deutlichen Signalabfall. Demgegenüber bricht das Messsignal bei herkömmlichem Signalabgriff schon bei moderaten Frequenzen lange vor dem GHz-Bereich ein.

Figur 3 zeigt ein Blockdiagramm einer Ausführungsform eines Messkerns für den Sensor 10. Die analogen und digitalen Schaltungen des Messkerns bilden gemeinsam die Steuer- und Auswertungseinheit 24. In einer groben Unterteilung ist ein beispielhaft mit FPGA (Field Programmable Gate Array) bezeichneter digitaler Verarbeitungsbaustein 56 vorgesehen, der mit einer internen oder externen Basistaktquelle 58 auf einer Basisfrequenz von beispielsweise 10-400 MHz arbeitet. Eine Frequenzanpassungseinheit 60 mischt im Sendepfad des Verarbeitungsbausteins auf eine höhere Modulationsfrequenz von 500 MHz, einigen GHz oder noch höher herauf und entsprechend das Empfangssignal aus der Modulationsfrequenz wieder in die Basisfrequenz herab. Somit arbeitet die Signalerzeugung und Auswertung in dem digitalen Verarbeitungsbaustein 56 auf der vergleichsweise geringen und handhabbaren Basisfrequenz und nur der optische Pfad mit der höheren Modulationsfrequenz, d.h. die Wandler zwischen elektrischem und optischem Signal in Form von Lichtsender 12 und Lichtempfänger 20 mit Signalabgriffschaltung 22 sowie das Lichtsignal selbst.

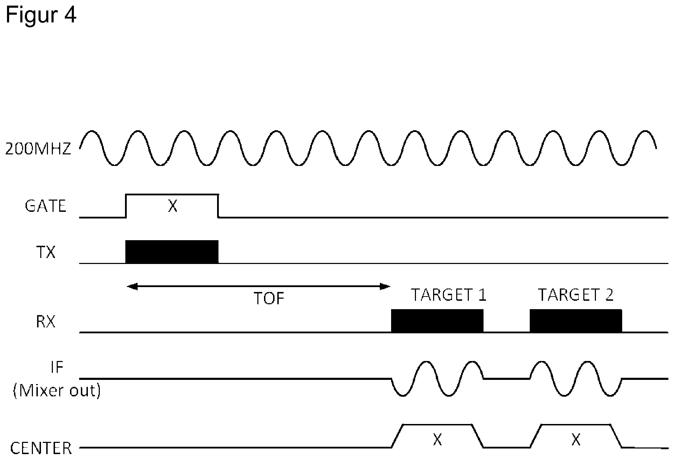

Die Lichtlaufzeitmessung mittels des Messkerns gemäß Figur 3 wird nun im Einzelnen oben links bei Signalerzeugung beginnend im Uhrzeigersinn bis zur digitalen Auswertung unten links erläutert, wobei jeweils die Signale an ausgewählten Punkten des Messkerns in Figur 4 dargestellt sind.

In dem digitalen Verarbeitungsbaustein 56 wird von einer Schwingungserzeugungseinheit 62 für eine Phasenmessung ein periodisch moduliertes Signal bereitgestellt. Dabei handelt es sich vorzugsweise zunächst einfach um den durch die Basistaktquelle 58 bereitgestellten Basistakt, der dann an einem Ausgang des digitalen Verarbeitungsbausteins 56 bereitsteht. Durch ein erstes Tiefpassfilter 64 wird der Basistakt in einen Sinus der Basisfrequenz gewandelt. In Figur 4 ist oben ein solches kontinuierliches periodisches Signal als Ausgangspunkt dargestellt, dessen Frequenz rein beispielhaft 200 MHz beträgt.

Dieses Sinussignal wird nun in der Frequenzanpassungseinheit 60 auf eine höhere Modulationsfrequenz heraufgemischt. Dazu weist die Frequenzanpassungseinheit 60 einen weiteren Taktgeber 66 von beispielsweise 2 GHz auf, der diese Frequenz beispielsweise mit Hilfe einer PLL aus einem Eingangstakt synthetisiert.Der Eingangstakt wird vorzugsweise von demselben nicht dargestellten Systemquarz bereitgestellt, den auch die Basistaktquelle 58 zur Erzeugung des Basistaktes nutzt.

Ein sendeseitiger Mischer 68 erzeugt nun aus dem Eingangssignal, im Beispiel ein Sinus von 200 MHz, und der höheren Frequenz des weiteren Taktgebers 66 von beispielsweise 2 GHz ein heraufgemischtes Signal. Unerwünschte Signalanteile werden durch ein Bandpassfilter 70 unterdrückt, der beispielsweise als SAW-Filter ausgebildet ist. Am Ausgang der Frequenzanpassungseinheit 60 wird somit ein kontinuierliches periodisches Signal der höheren Modulationsfrequenz bereitgestellt, in diesem Beispiel mit 1,8 GHz, und an eine Bursterzeugungseinheit 72 übergeben.

Parallel dazu wird von einer Pulserzeugungseinheit 74 ein Puls von beispielsweise 10 ns erzeugt. Man kann den Puls als Zeitfenster für ein An- und Abschalten auffassen (Gating), der deshalb in Figur 4 mit der Bezeichnung GATE illustriert ist. In dieser Funktion wird der Puls von der Bursterzeugungseinheit 72 genutzt, die wie ein Schalter das kontinuierliche periodische Signal gerade während des Pulses passieren lässt und sonst nicht. Das Ergebnis ist das Sendesignal, nämlich ein mit 1,8 GHz modulierter Puls oder Burst der Länge 10 ns. Die schnelle Modulation des Sendesignals TX ist in Figur 4 nicht in ihren einzelnen Schwingungen, sondern verschmelzend als schwarzer Block dargestellt.

Das Sendesignal wird über den Lichtsender 12 ausgesandt und trifft nach Remission an einem oder mehreren Objekten 16 auf ein beispielhaft für den Lichtempfänger 18 stehendes Lawinenphotodiodenelement 20. Das Empfangssignal wird mit Hilfe der Signalabgriffschaltung 22 ausgelesen. Im Beispiel der Figur 4 ist das Empfangssignal RX auf zwei Objekte getroffen, und dementsprechend finden sich zwei modulierte Empfangspulse TARGET1 und TARGET2. Der zeitliche Abstand zwischen dem modulierten Puls im Sendesignal TX und den Empfangspulsen TARGET1 und TARGET2 ist die gesuchte Lichtlaufzeit TOF.

Die Signalabgriffschaltung 22 führt das Empfangssignal der Frequenzanpassungseinheit 60 zu, wo es ein empfangsseitiger Mischer 76 mit Hilfe des weiteren Taktgebers 66 auf die Basisfrequenz heruntermischt. Unerwünschte Mischprodukte werden anschließend durch ein zweites Tiefpassfilter 78 unterdrückt.

Das Ergebnis ist ein Empfangssignal, in dem die Modulation während der Empfangspulse deutlich verlangsamt ist. Deshalb werden die einzelnen Perioden der Schwingung in der Darstellung dieses heruntergemischten Empfangssignals IF der Figur 4 wieder erkennbar. Damit das Empfangssignal in dem digitalen Verarbeitungsbaustein 56 ausgewertet werden kann, wird es in einem A/D-Wandler 80 digitalisiert. Dies kann eine echte Mehrbitwandlung sein. Insbesondere im Falle einer Lichtlaufzeitmessung auf Basis einer statistischen Auswertung mehrerer Messungen mit jeweiligen Einzelpulsen oder Einzelburst, also einem Pulmittelungsverfahren oder Burstmittelungsverfahren, kann die vergleichsweise aufwändige Mehrbitwandlung durch eine Binarisierung wie in EP 1 972 961 B1 direkt über die Eingänge der digitalen Verarbeitungseinheit 56, gegebenenfalls wenige Schwellen wie in EP 2 942 645 B1 oder EP 2 942 644 B1 erfolgen. Hier sind Schaltungsaufwand und geforderte Genauigkeit gegeneinander abzuwägen.

In dem digitalen Verarbeitungsbaustein 56 wird das Empfangssignal nun einerseits mit einer Pulsauswertungseinheit 82 und andererseits mit einer Phasenauswertungseinheit 84 ausgewertet. Die Pulsauswertungseinheit 82 bestimmt die Lage der modulierten Pulse TARGET1 und TARGET2, etwa deren Schwerpunkt, und das Ergebnis kann ein Pulsschwerpunkt sein wie in Figur 4 mit dem Signal CENTER illustriert. Der Abstand zwischen den Schwerpunkten im Signal CENTER und dem ursprünglichen Pulssignal GATE des Sendepfades ist bereits ein erster Wert für die jeweilige Lichtlaufzeit zu den beiden Objekten des Beispiels, aber durch die vergleichsweise große Pulsbreite von 10 ns noch nicht hochgenau.

Deshalb bestimmt die Phasenauswertungseinheit 84 auch noch den Phasenversatz der Modulation innerhalb der modulierten Empfangspulse TARGET1 und TARGET2 gegenüber dem in Figur 4 mit 200 MHz bezeichneten Ausgangssignal. Mit diesem Phasenversatz kann die zeitliche Lage der modulierten Empfangspulse TARGET1 und TARGET2 noch wesentlich genauer bestimmt werden. Die Lage der Schwerpunkte gemäß der Pulsauswertung im Signal CENTER löst die Mehrdeutigkeit des Phasenverfahrens auf, über die Phase wird nur noch die Restlichtlaufzeit innerhalb einer Periode der Modulationsfrequenz von hier 1,8 GHz bestimmt.

Somit werden ein pulsbasiertes und ein phasenbasiertes Lichtlaufzeitverfahren auf Basis von ausgesandten modulierten Pulsen oder Bursts kombiniert. Über ein Pulsverfahren wird die Lage eines modulierten Empfangspulses und damit ein noch relativ grober Abstandswert bestimmt. In einem zweiten Schritt wird die Phasenlage der Modulation analysiert und dadurch der Abstandswert verfeinert. Die Messgenauigkeit entspricht einer Phasenmessung der hohen Modulationsfrequenz, wobei die integrierte Sendeleistung durch die Bursts deutlich reduziert und die Eindeutigkeitsproblematik durch die Auswertung der Pulslage gelöst ist.

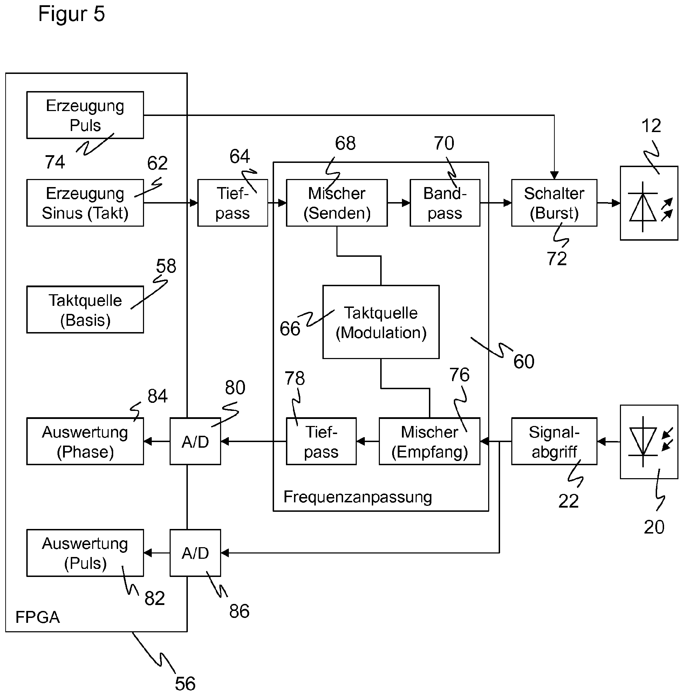

Figur 5 zeigt ein Blockdiagramm einer weiteren Ausführungsform eines Messkerns für den Sensor 10. Dies entspricht weitgehend der Figur 3. Dort jedoch basieren Pulsauswertung und Phasenauswertung auf dem heruntergemischten Empfangssignal. Für die Pulsauswertung kann alternativ das ursprüngliche Empfangssignal der Signalabgriffschaltung 22 direkt dem digitalen Verarbeitungsbaustein 56 zugeführt werden, um Verfälschungen durch den Mischprozess zu vermeiden und eine Hüllkurve der Pulsform mit mehr Stützstellen zu erhalten. Am Übergang des zusätzlichen Empfangspfades für die Pulsauswertung in den digitalen Verarbeitungsbaustein 56 ist in Figur 5 ein A/D-Wandler 86 dargestellt. Anstelle einer vollständigen A/D-Wandlung können auch eine Binarisierung beziehungsweise wenige Schwellen genügen.

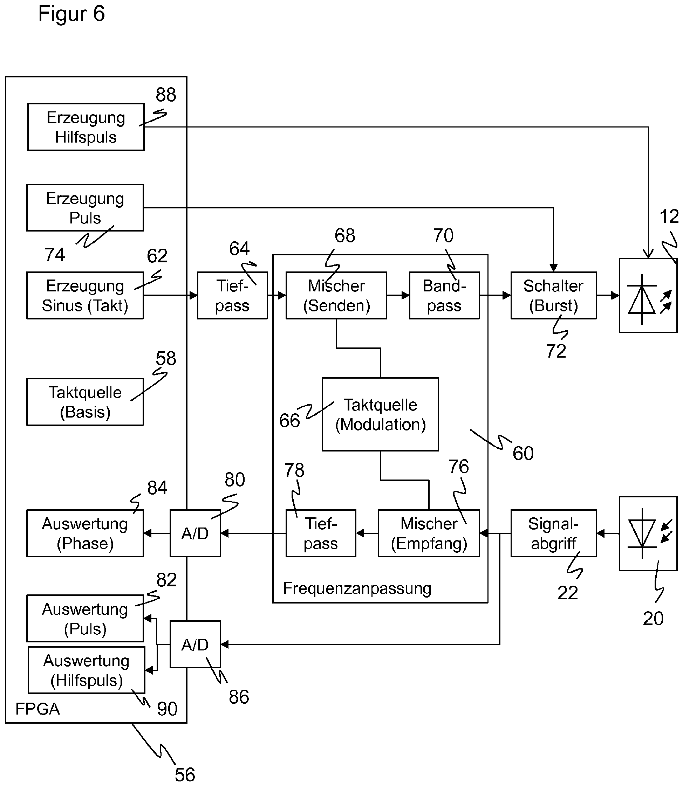

Figur 6 zeigt ein Blockdiagramm einer weiteren Ausführungsform eines Messkerns für eine Lichtlaufzeitmessung mit dem Sensor 10. Der Messkern ist ähnlich aufgebaut wie in Figur 5, ergänzt die Messung jedoch um eine Hilfsmessung mit einem Hilfspuls. Dazu ist in dem digitalen Verarbeitungsbaustein 56 zusätzlich eine Hilfspuls-Erzeugungseinheit 88 vorgesehen, welche den Lichtsender 12 mit kurzen Pulsen beispielsweise von 2 ns Dauer ansteuert. Empfangsseitig ist entsprechend eine zusätzliche Hilfpuls-Auswertungseinheit 90 ergänzt. Sie ist als eigener Block neben der Pulsauswertungseinheit 82 gezeigt, kann aber mindestens teilweise gemeinsam damit implementiert sein und erhält vorzugsweise dasselbe oder ein gleichartiges Empfangssignal.

Der Hilfspuls wird für eine zusätzliche Pulsmessung verwendet. Grundsätzlich ist eine Einzelpulsmessung mit dem Hilfspuls denkbar. Es ist aber zu beachten, dass immer nur ein bestimmtes Laser- oder Sendebudget zur Verfügung steht, das sich ein einzelner Hilfspuls mit dem modulierten Puls teilen muss. Außerdem überlagern sich natürlich auch empfangsseitig die modulierten Pulse und der Hilfspuls, was insbesondere bei mehreren Zielen kaum noch aufgetrennt werden könnte. Daher wird vorzugsweise ein Pulsmittelungsverfahren eingesetzt. Das hat nicht nur den Vorteil, dass es mit schwachen Hilfspulsen auskommt. Es bietet außerdem die Möglichkeit, Störeinflüsse des Hilfspulses auf die Messung mit dem modulierten Puls auszublenden.

Dazu wird die Wiederholfrequenz des Hilfspulses abweichend von derjenigen des modulierten Pulses gewählt. Beispielsweise wird der Hilfspuls bei jeder Messwiederholung um zusätzliche 10 ns gegenüber dem modulierten Puls verzögert. Das führt dazu, dass sich der Hilfspuls im Empfangssignal sukzessive gegenüber dem modulierten Puls nach hinten schiebt. Durch ein auf die modulierten Pulse synchronisiertes Pulsmittelungsverfahren verschwindet dann der Hilfspuls durch Ausmitteln. Umgekehrt kann die Auswertung des Hilfspulses für eine konstruktive Überlagerung von Messwiederholungen auf dessen Wiederholfrequenz abgestimmt werden.

Mit der zusätzlichen Lichtlaufzeitmessung durch den Hilfspuls kann die Eindeutigkeit der Phasenmessung weiter verbessert werden, beispielsweise bei zwei sehr eng aufeinanderfolgenden teiltransparenten Zielen. Der modulierte Puls muss eine gewisse Dauer haben, weil sonst zu wenig Modulation übrig bleibt, während die Dauer des Hilfspulses abgesehen von praktisch-technischen Limitierungen, also rein vom Verfahren her betrachtet, beliebig kurz sein darf. Deshalb eignet sich ein Hilfspuls, um Mehrdeutigkeiten noch besser aufzulösen. Prinzipiell könnte die Lichtlaufzeitmessung mittels Hilfspuls sogar diejenige über den Empfangszeitpunkt des modulierten Pulses ersetzen.

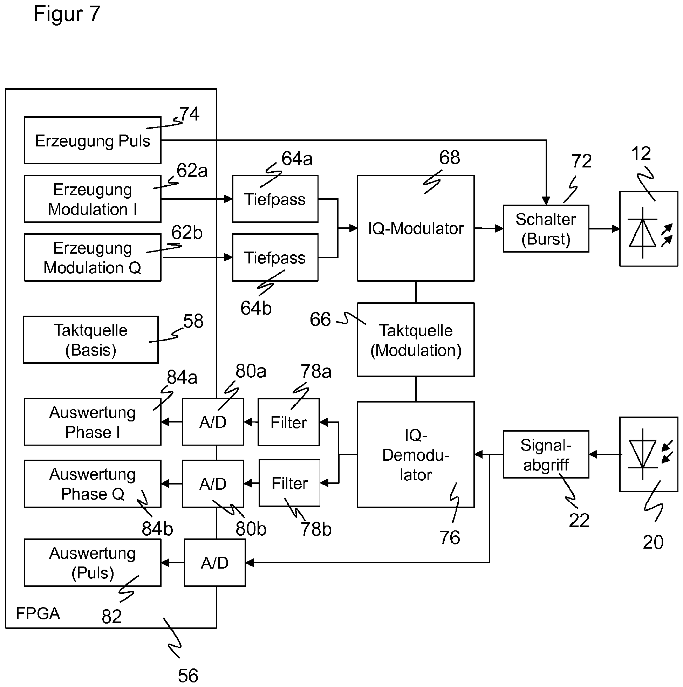

Figur 7 zeigt ein Blockdiagramm einer weiteren Ausführungsform eines Messkerns für eine Lichtlaufzeitmessung mit dem Sensor 10. Der Grundaufbau ähnelt wiederum der Figur 3. Der Hauptunterschied besteht darin, dass nun als sendeseitiger Mischer 68 ein IQ-Modulator und entsprechend als empfangsseitiger Mischer 76 ein IQ-Demodulator eingesetzt wird. In anderen Ausführungsformen wird nur der Sendepfad mit einer IQ-Modulation beziehungsweise nur der Empfangspfad mit einer IQ-Demodulation aufgerüstet.

Entsprechend der Quadraturamplitudenmodulation sind nun jeweils zwei Teilpfade für die Signale I und Q vorgesehen. Sendeseitig gibt es also je eine Schwingungserzeugungseinheit 62a-b für I und Q mit jeweils einem nachgeordneten Tiefpass 64a-b, um aus dem Takt einen Sinus für die Modulation der Bursts zu gewinnen. Das Ausgangssignal der Tiefpässe 64a-b kann für eine Phasenkontrolle der Schwingungserzeugungseinheiten 62a-b genutzt werden. Das Bandpassfilter 70 kann in einer Ausführungsform mit IQ-Modulator entfallen. Außerdem besteht die Möglichkeit, sehr schnell zwischen oberem und unterem Seitenband umzuschalten, insbesondere durch Invertieren des Basisbandsignals, ohne den weiteren Taktgeber 66 zu verstimmen, so dass beispielsweise Einschwingzeiten einer PLL des weiteren Taktgebers 66 vermieden werden. In dem bereits erwähnten Zahlenbeispiel mit einer Basisfrequenz von 200 MHz und einem Takt von 2 GHz des weiteren Taktgebers 66 kann so sehr schnell und praktisch ohne störende Einschwingeffekte zwischen 1,8 GHz und 2,2 GHz umgeschaltet werden. Denkbar wäre auch, abweichend von der Darstellung der Figur 7 zusätzlich zu den Sendepfaden für I und Q einen weiteren Pfad für das invertierte Basisbandsignal I vorzusehen und wahlweise darauf umzuschalten. Eine Messung in unterschiedlichen Frequenzen kann, abgesehen von den allgemeinen Möglichkeiten eines Ausweichens im Frequenzraum, für eine Phasenmessung mit mehreren Frequenzen zur Erweiterung des Eindeutigkeitsbereichs genutzt werden.

Übrigens gibt es die Möglichkeit der schnellen Umschaltung für einen Frequenzwechsel auch in einer Ausführungsform ohne IQ-Modulator, also beispielsweise einer modifizierten Ausführungsform gemäß Figur 3. Dazu werden dort dem Mischer 68 zwei Bandpassfilter nachgeschaltet statt nur einem Bandpassfilter 70, und mit einem nachgeordneten Schalter wird ausgewählt, ob das Ausgangssignal des einen oder des anderen Bandpassfilters an der Bursterzeugungseinheit 72 angelegt ist. Die Durchlassfrequenzen der beiden Bandpassfilter liegen auf der oberen Seitenbandfrequenz beziehungsweise der unteren Seitenbandfrequenz, beispielsweise mit den bisherigen Zahlenwerten auf 1,8 GHz beziehungsweise 2,2 GHz. Der Schalter kann nun sehr schnell zwischen den beiden Bandpassfiltern und damit den beiden Frequenzen der Seitenbänder wechseln. Alternativ zu zwei Bandpassfiltern mit festen Frequenzen ist auch ein verstimmbares Hochfrequenzfilter vorstellbar.

Zurück zu Figur 7, werden nach der IQ-Demodulation empfangsseitig das I-Signal und das Q-Signal einzeln weiterverarbeitet. Als Filter 78a-b kommen beispielsweise auf die Modulations- beziehungsweise die Basisfrequenz abgestimmte Kerbfilter, Tiefpassfilter oder Kombinationen davon in Betracht. Nach einer A/D-Wandlung 80a-b, die wiederum eine Binarisierung oder eine Abtastung mit wenigen Schwellen sein kann, stehen durch Auswertung 84a-b der Phase in den Signalkomponenten I und Q doppelt so viele Informationen zur Verfügung, beispielsweise Nulldurchgänge, so dass die Phasenlage beziehungsweise der Phasenversatz noch genauer bestimmt werden kann.

Die Pulsauswertung 82 und die Kombination der Ergebnisse aus der Pulsauswertung 82 und der Phasenauswertung 84a-b erfolgt analog den Erläuterungen zu Figur 3. AIlerdings wird in dieser Ausführungsform das Empfangssignal wie zu Figur 5 erläutert, der Pulsauswertung 82 vorzugsweise direkt von der Signalabgriffschaltung 22 zugeführt, d.h. ohne IQ-Demodulation.

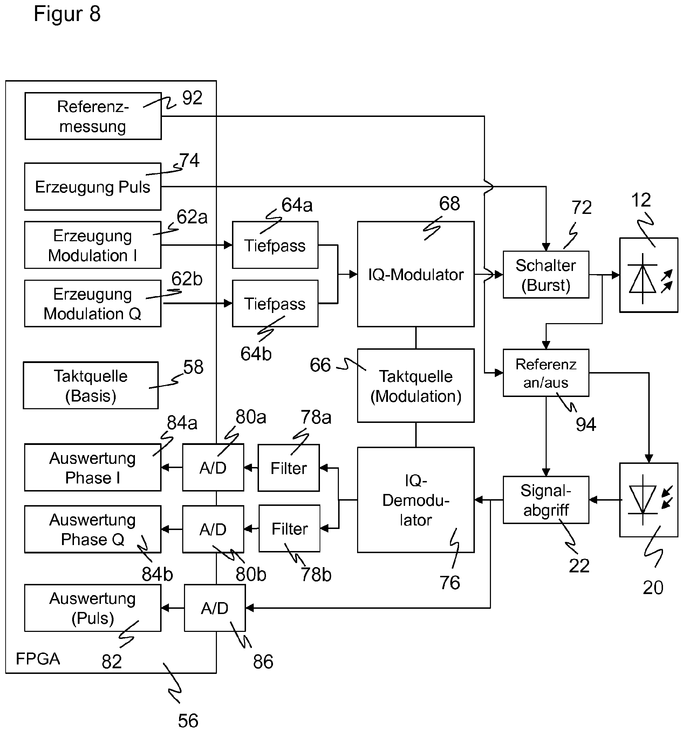

In weiteren Ausführungsformen wird noch ein Referenzkanal hinzugefügt. Figur 8 zeigt ein Ausführungsbeispiel mit einer elektrischen Referenz. Zusätzlich zu der Ausführungsform gemäß Figur 7 ist zum einen eine Referenzmessungseinheit 92 in dem digitalen Verarbeitungsbaustein 56 und außerdem bei der Sende- und Empfangsstufe ein damit verbundener Referenzmessungsschalter 94 vorgesehen. Dem Referenzmessungsschalter 94 wird das elektrische Sendesignal, mit dem der Lichtsender 12 angesteuert wird, ebenfalls als Referenzsignal zugeführt. Somit enthält das Referenzsignal sämtliche Effekte auf das Sendesignal, welche die Lichtlaufzeit und insbesondere die Phase beeinflussen und zu Messfehlern führen würden. Der Referenzmessungsschalter 94 ist weiterhin mit dem Lichtempfänger 18 verbunden, um diesen abschalten beziehungsweise dessen Signal unterdrücken zu können. Bei einem SPAD-Lichtempfänger mit Lawinenphotodiodenelement 20 kann dafür die Vorspannung unter die Durchbruchspannung abgesenkt werden. Außerdem ist der Referenzmessungsschalter 94 in der Lage, das Referenzsignal in den Empfangspfad einzuspeisen, und zwar wahlweise am Eingang oder am Ausgang der Signalabgriffschaltung 22.

Mit Hilfe der Referenzmessungseinheit 92 kann nun eine Referenzmessung durchgeführt werden. Dazu wird der Referenzmessungsschalter 94 umgeschaltet, um den eigentlichen Messbetrieb zu unterbrechen. Der Lichtempfänger 20 wird deaktiviert, und das Referenzsignal wird anstelle des Empfangssignals in den Empfangspfad eingespeist. Auf diese Weise können die internen Einflüsse auf die Laufzeiten und Phasen bestimmt und beim erneuten Messbetrieb berücksichtigt werden. Eine Referenzmessung wird zumindest ab Werk oder bei der Inbetriebnahme durchgeführt. Bevorzugt findet die Referenzmessung zyklisch statt, wobei die Driften maßgeblich temperaturbedingt und daher die Referenzzyklen nicht allzu schnell gewählt werden müssen.

Eine einfachere elektrische Referenz besteht darin, das in Figur 4 mit 200 MHz bezeichnete Basisbandsignal am Ausgang des ersten Tiefpassfilters 64, der aus dem Basistakt einen Sinus geformt hat, der Phasenauswertung 84 zuzuführen, da durch die Tiefpassfilterung eine erhebliche Phasendrehung entstehen kann.

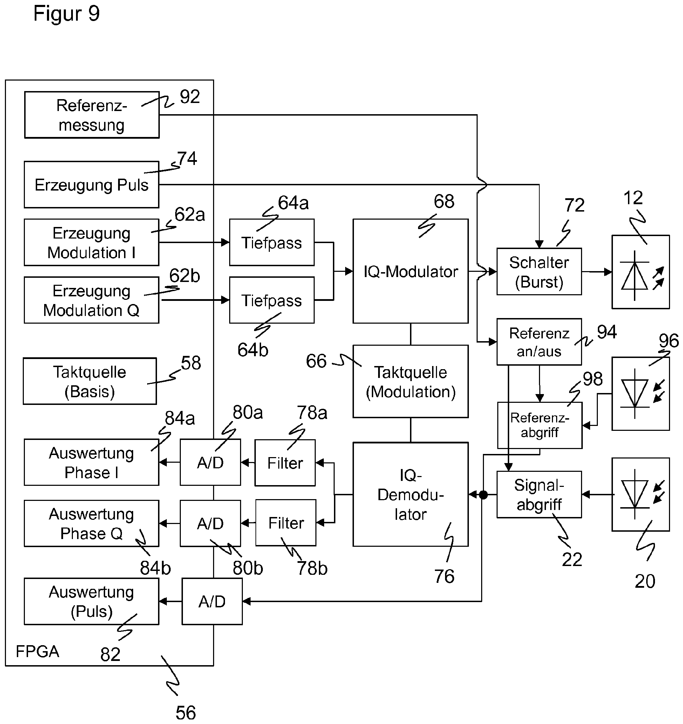

Figur 9 zeigt ein Ausführungsbeispiel mit einer optischen Referenz, Anders als bei der elektrischen Referenz gemäß Figur 8 wird hier nicht das elektrische Sendesignal als Referenz genutzt, sondern es ist ein optischer Kurzschlussvorgesehen, der einen Teil des Sendelichts auf einem definierten Referenzpfad zurückführt, vorzugsweise unmittelbar und damit ohne Lichtweg durch den Überwachungsbereich 14. Wie in Figur 9 dargestellt, ist ein Referenzempfänger 96 vorgesehen, insbesondere in Form von einem oder mehreren dedizierten Lawinenphotodiodenelementen 20, die als Referenzempfänger 96 dienen. Solche Referenzelemente können auch optisch von Umgebungslicht abgeschirmt werden. Der Referenzempfänger 96 wird durch eine Referenzabgriffschaltung 98 ausgelesen, die ihr Referenzsignal von dem Referenzempfänger 96 anstelle des Empfangssignals in den Empfangspfad einspeist. Der Referenzmessungsschalter 94 ist mit Signalabgriffschaltung 22 und Referenzabgriffschaltung 98 verbunden, um das jeweils nicht aktive Signal zu unterdrücken, wobei dies auch wie in Figur 8 alternativ direkt am Lichtempfänger 18 geschehen kann. In einer anderen Ausführungsform wird das Referenzsignal von der Signalabgriffschaltung 22 ausgelesen, und die Referenzabgriffschaltung 98 entfällt. Bei einer mehrkanaligen Auslesung ist auch denkbar, das Referenzsignal und das Messsignal gleichzeitig zu erzeugen und auszuwerten.

In den bisher erläuterten Ausführungsformen blieben die Puls- und damit Burstlänge sowie deren zeitliche Lage festgehalten. Diese Größen können aber auch vorteilhaft variiert werden, insbesondere auch bei einem Puls- oder Burstmittelungsverfahren zwischen verschiedenen Einzelmessungen.

So ist die Pulsdauer, die ja die Gatedauer und damit die Burstdauer bestimmt, ein Kompromiss. Eine lange Gatedauer ermöglicht viele Nulldurchgänge zur Phasenbestimmung und/oder eine niedrigere Basisfrequenz, was beides für eine einfache und genaue Messung hilfreich ist. Andererseits drohen lange Bursts bei mehreren Zielen in kurzen gegenseitigen Abständen ineinanderzulaufen, so dass für eine Multiechofähigkeit kurze Gatedauern vorteilhafter wären. Somit kann eine Anpassung je nach Priorisierung der Anforderungen ebenso wie ein Umschalten zwischen verschieden langen Gatedauern vorteilhaft sein.

Es kann vorteilhaft sein, die zeitliche Position der Pulse und damit der Gates um Bruchteile der Basisfrequenz zu versetzen, um nachteilige Effekte durch das Einschwingen verschiedener Filterbausteine zu reduzieren, insbesondere Tiefpass 64 und Bandpass 70. Das Einschwingverhalten der modulierten Pulse hängt nämlich von der anfänglichen Phase beziehungsweise Amplitude und damit den Gates ab. Werden die Gates also verschoben, so ergibt sich auch ein unterschiedliches Einschwingverhalten. Das ermöglicht insbesondere bei mehreren Messdurchläufen eine Optimierung des Empfangssignals für eine bessere Phasenauswertung, indem Einzelmessungen mit über eine Periode verteilten zeitlichen Positionen der Gates gemittelt werden. Die positiven und negativen Effekte beim Einschwingen mitteln sich dann aus. Sofern mit mehreren Frequenzen gemessen wird, wie das für einige Ausführungsformen mit zwei Bandpassfiltern oder einem I/Q-Mischer und alternativem Nutzen der beiden Seitenbänder beschrieben ist, werden vorzugsweise Einzelmessungen mit über eine Periode verteilten zeitlichen Positionen der Gates für beide Frequenzen durchgeführt.

Es ist klar, dass Basistakt und die Frequenz des weiteren Taktgebers 66 nicht auf die Beispielwerte von 200 Mhz und 2 GHz festgelegt sind. Der Sensor 10 kann auch so ausgebildet sein, dass diese Werte variiert werden. Eine besonders vorteilhafte Möglichkeit hierfür wurde schon erwähnt, nämlich das Ausnutzen von Seitenbändern oder invertierten Basisbandsignalen bei Ausführungsformen mit einem IQ-Mischer. Eine weitere bevorzugte Ausführungsform sieht vor, dass der weitere Taktgeber 66 eine Frequenz bereitstellt, die kein ganzzahliges Vielfaches der Basisfrequenz ist. Dazu kann man beispielsweise eine PLL des weiteren Taktgebers 66 etwas verstimmen. Es gibt dann ein kleines Offset zwischen Vielfachen der Basisfrequenz und der Frequenz des weiteren Taktgebers 66. Während das im vorigen Absatz beschriebene Versetzen von Gates das Signal in der Basisfrequenz betrifft, sorgt das leichte Verstimmen der Frequenz des weiteren Taktgebers 66 für einen ähnlichen Effekt im Signal in der Modulationsfrequenz, denn durch die Schwebung wird das Einschwingen des modulierten Pulses variiert, was dann nach mehreren Messdurchläufen für ein Ausmitteln von Störungen und damit ein Ausmitteln von Messfehlern aufgrund von Einschwingverhalten führt.

In den dargestellten Ausführungsbeispielen ist jeweils ein digitaler Verarbeitungsbaustein 56 und eine separate Frequenzanpassungseinheit 60 vorgesehen, wobei letztere in einigen Fällen durch IQ-Bausteine 68,76 ersetzt ist. Ohne eigene Darstellung sind auch Ausführungsformen denkbar, in denen weitere oder sogar alle Teile der Frequenzanpassungseinheit 60 beziehungsweise der IQ-Bausteine 68, 78 samt angeschlossener Elemente durch digitale Bausteine ersetzt, insbesondere mit in den digitalen Verarbeitungsbaustein 56 integriert sind.

Abschließend sei noch erwähnt, dass manche denkbare Erweiterungen der Erfindung zwar jeweils nur im Zusammenhang mit einer bestimmten Ausführungsform erläutert sind, aber auch bei anderen Ausführungsformen eingesetzt beziehungsweise damit kombiniert werden können. Das betrifft beispielsweise eine zusätzliche Pulslaufzeitmessung mit einem Hilfspuls, die unter Bezugnahme auf Figur 6 erläutert wurde, aber genauso in Ausführungsformen gemäß Figur 7 bis 9 mit IQ-Modulation denkbar ist, oder Referenzmessungen nach Figur 8 oder 9, die auch ohne IQ-Modulation wie in den Figuren 3 bis 6 ergänzt werden können.

## Patentansprüche

1. Entfernungsmessender optoelektronischer Sensor (10) zur Erfassung und Abstandsbestimmung eines Objekts (16) in einem Überwachungsbereich (14) mit einem Lichtsender (12) zum Aussenden eines Sendesignals, mit einem Lichtempfänger (18) zum Erzeugen eines Empfangssignals sowie mit einer Steuer- und Auswerteeinheit (24), die dafür ausgebildet ist, aus dem Empfangssignal eine Lichtlaufzeit und daraus den Abstand des Objekts (16) zu bestimmen und dafür als Sendesignal mindestens einen periodisch modulierten Puls auszusenden, einen Empfangszeitpunkt des Pulses in dem Empfangssignal sowie einen Phasenversatz der Modulation zwischen Sendesignal und Empfangssignal in einer Umgebung des Empfangszeitpunkts zu bestimmen und den Abstand des Objekts (16) aus dem Empfangszeitpunkt und dem Phasenversatz zu ermitteln,
**dadurch gekennzeichnet,**
**dass** die Steuer- und Auswertungseinheit (24) eine Basistaktquelle (58) mit einer Basisfrequenz von 10-400 MHz, einen weiteren Taktgeber (66) mit einer höheren Frequenz und einen sendeseitigen Mischer (68) aufweist, der aus dem Eingangssignal der Basisfrequenz durch Heraufmischen mit der höheren Frequenz des weiteren Taktgebers (66) ein heraufgemischtes Signal erzeugt, so dass der Puls mit einer Modulationsfrequenz von mindestens 1 GHz moduliert ist.

2. Sensor (10) nach Anspruch 1,
wobei der Puls mit einer Frequenz von mindestens 2 GHz oder mehr moduliert ist.

3. Sensor nach einem der vorhergehenden Ansprüche,
wobei der sendeseitige Mischer (68) als I/Q-Mischer ausgebildet ist.

4. Sensor (10) nach einem der vorhergehenden Ansprüche,
wobei der Taktgeber (66) eine Frequenz erzeugt, die einem nichtganzzahligen Vielfachen der Basisfrequenz entspricht.

5. Sensor (10) nach einem der vorhergehenden Ansprüche,
wobei die Steuer- und Auswertungseinheit dafür ausgebildet ist, die Modulationsfrequenz zu wechseln, insbesondere durch Wechsel von Seitenbändern eines als I/Q-Mischer ausgebildeten sendeseitigen Mischers (68) oder durch Vorsehen mindestens zweier Bandpassfilter unterschiedlicher Durchlassfrequenz.

6. Sensor (10) nach einem der vorhergehenden Ansprüche,
wobei die Steuer- und Auswertungseinheit (24) eine Pulserzeugungseinheit (74) aufweist, um Zeitfenster für den modulierten Puls vorzugeben und insbesondere das Zeitfenster um eine Phase entsprechend einem Bruchteil der Basisfrequenz zu versetzen.

7. Sensor (10) nach einem der vorhergehenden Ansprüche,
wobei die Steuer- und Auswertungseinheit (24) dafür ausgebildet ist, einer Bestimmung des Abstands zumindest zwei Messungen mit unterschiedlich langen modulierten Pulsen zugrunde zu legen.

8. Sensor nach einem der vorhergehenden Ansprüche,
wobei die Steuer- und Auswertungseinheit (24) dafür ausgebildet ist, einen nicht modulierten Hilfspuls auszusenden und dessen Lichtlaufzeit zu bestimmen.

9. Sensor (10) nach einem der vorhergehenden Ansprüche,
wobei der Lichtempfänger (18) eine Vielzahl von Lawinenphotodiodenelemente (20) aufweist, die jeweils mit einer Vorspannung oberhalb einer Durchbruchspannung vorgespannt und somit in einem Geiger-Modus betrieben sind.

10. Sensor (10) nach Anspruch 9,
wobei eine Signalabgriffschaltung (22) vorgesehen ist, die ein aktives Kopplungselement (44) mit einem Eingang (46), der mit den Lawinenphotodiodenelementen (20) verbunden ist, und einem Ausgang (48) aufweist, das den Geigerstrom am Eingang (46) auf einen in Verlauf und Pegel dem Geigerstrom entsprechenden Messstrom abbildet, wobei der Eingang für den Geigerstrom einen virtuellen Kurzschluss gegen ein Potential bildet und der Ausgang (48) von dem Eingang (44) entkoppelt ist, wobei das Kopplungselement (44) insbesondere genau einen Signalabgriff-Transistor aufweist.

11. Sensor (10) nach einem der vorhergehenden Ansprüche,
wobei die Steuer- und Auswertungseinheit (24) einen empfangsseitigen Mischer (76) aufweist, insbesondere einen I/Q-Mischer, welcher das Empfangssignal unter Erhaltung der Phasenlage auf eine Basisfrequenz herabmischt.

12. Sensor (10) nach einem der vorhergehenden Ansprüche,
wobei die Steuer- und Auswertungseinheit (24) einen ersten Empfangspfad (82) für die Bestimmung des Empfangszeitpunktes und einen zweiten Empfangspfad (84) für die Bestimmung des Phasenversatzes aufweist.

13. Sensor (10) nach einem der vorhergehenden Ansprüche,
wobei die Steuer- und Auswertungseinheit (24) dafür ausgebildet ist, mehrere Einzelmessungen mit jeweils mindestens einem modulierten Puls durchzuführen, aus den Einzelmessungen ein gemeinsames Empfangssignal zu bilden und das gemeinsame Empfangssignal für die Bestimmung von Empfangszeitpunkt und/oder Phasenversatz auszuwerten.

14. Verfahren zur Erfassung und Abstandsbestimmung eines Objekts (16) in einem Überwachungsbereich (14), bei dem mit einem Lichtsender (12) ein Sendesignal ausgesandt, mit einem Lichtempfänger (18) ein Empfangssignal erzeugt und aus dem Empfangssignal eine Lichtlaufzeit und daraus der Abstand des Objekts (16) bestimmt wird,wobei als Sendesignal mindestens ein periodisch modulierter Puls ausgesandt wird, dass ein Empfangszeitpunkt des Pulses in dem Empfangssignal sowie ein Phasenversatz der Modulation zwischen Sendesignal und Empfangssignal in einer Umgebung des Empfangszeitpunkts bestimmt und dass der Abstand des Objekts (16) aus dem Empfangszeitpunkt und dem Phasenversatz ermittelt wird,
**dadurch gekennzeichnet,**
**dass** mittels einer Basistaktquelle (58) mit einer Basisfrequenz von 10-400 MHz, eines weiteren Taktgebers (66) mit einer höheren Frequenz und eines sendeseitigen Mischers (68) aus dem Eingangssignal der Basisfrequenz durch Heraufmischen mit der höheren Frequenz des weiteren Taktgebers (66) ein heraufgemischtes Signal erzeugt wird, so dass der Puls mit einer Modulationsfrequenz von mindestens 1 GHz moduliert ist.

## Claims

1. A distance-measuring optoelectronic sensor (10) for detecting and determining a distance of an object (16) in a monitoring area (14), the sensor (10) having a light transmitter (12) for transmitting a transmission signal, a light receiver (18) for generating a reception signal, and a control and evaluation unit (24) configured to determine a light time of flight from the reception signal and, from that, the distance of the object (16), and for that purpose to transmit at least one periodically modulated pulse as a transmission signal, to determine a reception time of the pulse in the reception signal and a phase offset of the modulation between transmission signal and reception signal in a neighborhood of the reception time, and to determine the distance of the object (16) from the reception time and the phase offset,
**characterized in that** the control and evaluation unit (24) comprises a base clock (58) having a base frequency of 10-400 MHz, a further clock (66) having a higher frequency, and a transmission-side mixer (68) which generates a mixed signal from the base frequency input signal by mixing up with the higher frequency of the further clock (66) so that the pulse is modulated with a modulation frequency of at least 1 GHz.

2. The sensor (10) according to claim 1,
wherein the pulse is modulated at a frequency of at least 2 GHz or more.

3. The sensor (10) according to any of the preceding claims,
wherein the transmission-side mixer (68) is configured as an I/Q mixer.

4. The sensor (10) according to any of the preceding claims,
wherein the clock (66) generates a frequency corresponding to a non-integer multiple of the base frequency.

5. The sensor (10) according to any of the preceding claims,
wherein the control and evaluation unit (24) is configured to change the modulation frequency, in particular by changing sidebands of the transmission-side mixer (68) which is configured as an I/Q mixer, or by providing at least two band-pass filters of different passband frequency.

6. The sensor (10) according to any of the preceding claims,
wherein the control and evaluation unit (24) comprises a pulse generating unit (74) for setting time windows for the modulated pulse, and in particular to offset the time window by a phase corresponding to a fraction of the base frequency.

7. The sensor (10) according to any of the preceding claims,
wherein the control and evaluation unit (24) is configured to base a determination of the distance on at least two measurements with modulated pulses of different length.

8. The sensor (10) according to any of the preceding claims,
wherein the control and evaluation unit (24) is configured to transmit an unmodulated auxiliary pulse and to determine its light time of flight.

9. The sensor (10) according to any of the preceding claims,
wherein the light receiver (18) comprises a plurality of avalanche photodiode elements (20), each of which is biased at a bias voltage above a breakdown voltage and thus operated in a Geiger mode.

10. The sensor (10) according to claim 9,
wherein a signal tap circuit (22) is provided, which has an active coupling element (44) with an input (46) which is connected to the avalanche photodiode elements (20) and an output (48), the active coupling element (44) mapping a Geiger current at the input (46) to a measuring current corresponding to the Geiger current in course and level, wherein the input forms a virtual short circuit against a potential for the Geiger current and the output (48) is decoupled from the input (44), wherein in particular the coupling element (44) has exactly one signal tap transistor.

11. The sensor (10) according to any of the preceding claims,
wherein the control and evaluation unit (24) has a reception-side mixer (76), in particular an I/Q mixer, which mixes the reception signal down to a base frequency while maintaining the phase.

12. The sensor (10) according to claim 1,
wherein the control and evaluation unit (24) has a first reception path (82) for determining the reception time and a second reception path (84) for determining the phase shift.

13. The sensor (10) according to any of the preceding claims,
wherein the control and evaluation unit (24) is configured to perform a plurality of individual measurements, each with at least one modulated pulse, to form a common reception signal from the individual measurements, and to evaluate the common reception signal for the determination of reception time and/or phase offset.

14. A method for detecting and determining the distance of an object (16) in a monitoring area (14), wherein a transmission signal is transmitted by a light transmitter (12), a reception signal is generated by a light receiver (18) and a light time of flight is determined from the reception signal and, from that, the distance of the object (16), wherein at least one periodically modulated pulse is transmitted as a transmission signal, a reception time of the pulse in the reception signal and a phase offset of the modulation between transmission signal and reception signal in a neighborhood of the reception time are determined, and the distance of the object (16) is determined from the reception time and the phase offset,
**characterized in that**, by means of a base clock (58) having a base frequency of 10-400 MHz, a further clock (66) having a higher frequency, and a transmission-side mixer (68), a mixed signal is generated from the base frequency input signal by mixing up with the higher frequency of the further clock (66) so that the pulse is modulated with a modulation frequency of at least 1 GHz

## Revendications

1. Capteur télémétrique optoélectronique (10) pour détecter et déterminer la distance d'un objet (16) dans une zone à surveiller (14), comportant un émetteur de lumière (12) destiné à émettre un signal d'émission, un récepteur de lumière (18) destiné à générer un signal de réception, et une unité de commande et d'évaluation (24) qui est réalisée pour déterminer à partir du signal de réception un temps de parcours de lumière et à partir de celui-ci la distance de l'objet (16) et pour émettre à cet effet, en tant que signal d'émission, au moins une impulsion modulée périodiquement, pour déterminer un instant de réception de l'impulsion dans le signal de réception ainsi que pour déterminer un décalage de phase de la modulation entre le signal d'émission et le signal de réception dans la plage autour de l'instant de réception et pour déterminer la distance de l'objet (16) à partir de l'instant de réception et du décalage de phase,
**caractérisé en ce que**
l'unité de commande et d'évaluation (24) comprend une source d'horloge de base (58) avec une fréquence de base de 10 à 400 MHz, une autre horloge (66) avec une fréquence plus élevée, et un mélangeur (68) côté émetteur qui génère un signal mélangé vers le haut à partir du signal d'entrée de la fréquence de base par mélange vers le haut avec la fréquence plus élevée de l'autre horloge (66), de sorte que l'impulsion est modulée avec une fréquence de modulation d'au moins 1 GHz.

2. Capteur (10) selon la revendication 1,
dans lequel
l'impulsion est modulée avec une fréquence d'au moins 2 GHz ou plus.

3. Capteur selon l'une des revendications précédentes,
dans lequel
le mélangeur (68) côté émetteur est réalisé comme un mélangeur I/Q.

4. Capteur (10) selon l'une des revendications précédentes,
dans lequel
l'horloge (66) génère une fréquence qui correspond à un multiple non entier de la fréquence de base.

5. Capteur (10) selon l'une des revendications précédentes,
dans lequel
l'unité de commande et d'évaluation est réalisée pour changer la fréquence de modulation, en particulier par changement de bandes latérales d'un mélangeur (68) côté émetteur réalisé sous forme de mélanger I/Q ou par disposition d'au moins deux filtres passe-bande de fréquences de passage différentes.

6. Capteur (10) selon l'une des revendications précédentes,
dans lequel
l'unité de commande et d'évaluation (24) présente une unité de génération d'impulsion (74) pour spécifier des fenêtres temporelles pour l'impulsion modulée et en particulier pour décaler la fenêtre temporelle d'une phase en correspondance d'une fraction de la fréquence de base.

7. Capteur (10) selon l'une des revendications précédentes,
dans lequel
l'unité de commande et d'évaluation (24) est réalisée pour déterminer la distance sur la base d'au moins deux mesures avec des impulsions modulées de longueurs différentes.

8. Capteur selon l'une des revendications précédentes,
dans lequel
l'unité de commande et d'évaluation (24) est réalisée pour émettre une impulsion auxiliaire non modulée et pour déterminer son temps de parcours de lumière.

9. Capteur (10) selon l'une des revendications précédentes,
dans lequel
le récepteur de lumière (18) présente une multitude d'éléments formant photodiodes à avalanche (20) qui sont chacun polarisés chacun avec une tension de polarisation supérieure à une tension de claquage et qui fonctionnent donc en mode Geiger.

10. Capteur (10) selon la revendication 9,
dans lequel
il est prévu un circuit de prise de signal (22) qui présente un élément de couplage actif (44) avec une entrée (46) reliée aux éléments formant photodiodes à avalanche (20), et avec une sortie (48) qui reproduit le courant de Geiger à l'entrée (46) sur un courant de mesure correspondant, quant à l'évolution et au niveau, au courant de Geiger, l'entrée pour le courant de Geiger formant un court-circuit virtuel vers un potentiel, et la sortie (48) étant découplée de l'entrée (44), l'élément de couplage (44) présentant en particulier précisément un transistor à prise de signal.

11. Capteur (10) selon l'une des revendications précédentes,
dans lequel
l'unité de commande et d'évaluation (24) comprend un mélanger (76) côté récepteur, en particulier un mélangeur I/Q, qui mélange le signal de réception vers le bas jusqu'à une fréquence de base en conservant la position de phase.

12. Capteur (10) selon l'une des revendications précédentes,
dans lequel
l'unité de commande et d'évaluation (24) comprend un premier trajet de réception (82) pour déterminer l'instant de réception, et un second trajet de réception (84) pour déterminer le décalage de phase.

13. Capteur (10) selon l'une des revendications précédentes,
dans lequel
l'unité de commande et d'évaluation (24) est réalisée pour effectuer plusieurs mesures individuelles avec au moins une impulsion modulée respective, pour former un signal de réception commun à partir des mesures individuelles, et pour évaluer le signal de réception commun en vue de la détermination de l'instant de réception et/ou du décalage de phase.

14. Procédé pour détecter et déterminer la distance d'un objet (16) dans une zone à surveiller (14), dans lequel un signal d'émission est émis au moyen d'un émetteur de lumière (12), un signal de réception est généré au moyen d'un récepteur de lumière (18), et un temps de parcours de lumière et à partir de celui-ci la distance de l'objet (16) sont déterminés à partir du signal de réception, et en tant que signal d'émission, au moins une impulsion modulée périodiquement est émise, un instant de réception de l'impulsion dans le signal de réception ainsi qu'un décalage de phase de la modulation entre le signal d'émission et le signal de réception dans la plage autour de l'instant de réception sont déterminés, et la distance de l'objet (16) est déterminée à partir de l'instant de réception et du décalage de phase,
**caractérisé en ce que**
au moyen d'une source d'horloge de base (58) avec une fréquence de base de 10 à 400 MHz, d'une autre horloge (66) avec une fréquence plus élevée, et d'un mélangeur (68) côté émetteur, un signal mélangé vers le haut est généré à partir du signal d'entrée de la fréquence de base par mélange vers le haut avec la fréquence plus élevée de l'autre horloge (66) de sorte que l'impulsion est modulée avec une fréquence de modulation d'au moins 1 GHz.
